# FASCICULE DE BREVET EUROPEEN

(11) **EP 2 448 997 B1**
(45) Date de publication et mention de la délivrance du brevet: **03.10.2018**
(21) Numéro de dépôt: 10726094.5
(22) Date de dépôt: 24.06.2010
(51) Int. Cl.: C08G 69/42, C08G 69/48, C08G 69/26, C08L 77/06

(54) **COMPOSITION POLYAMIDE MODIFIEE**
MODIFIZIERTE POLYAMIDZUSAMMENSETZUNG
MODIFIED POLYAMIDE COMPOSITION

(30) Priorité: 03.07.2009 FR 0954564
(43) Date de publication de la demande: 09.05.2012
(73) Titulaire: Rhodia Opérations, 93306 Aubervilliers (FR)
(72) Inventeur: TOURAUD, Franck, F-38780 Eyzin Pinet (FR); JEOL, Stéphane, F-69006 Lyon (FR)
(74) Mandataire: Schuck, Alexander
(86) Numéro de dépôt international: PCT/EP2010/058975
(87) Numéro de publication internationale: WO 2011/000763

(56) Documents cités:
- CA-A1- 990 894
- US-A- 3 846 507
- US-A- 3 957 734
- US-A- 6 037 421
- EL-GARF S A ET AL: "MODIFYING NYLON 6 BY TREATING WITH DICHLOROBENZENESULFONYL CHLORIDE" TEXTILE RESEARCH JOURNAL, SAGE PUBLICATIONS, LONDON, GB, vol. 67, no. 1, 1 janvier 1997 (1997-01-01), pages 13-17, XP000642993 ISSN: 0040-5175
- Jisu Choi ET AL: "Nafion-sulfonated poly(arylene ether sulfone) composite membrane for direct methanol fuel cell", Macromolecular Research, vol. 13, no. 6, 1 December 2005 (2005-12-01), pages 514-520, XP055121553, ISSN: 1598-5032, DOI: 10.1007/BF03218489
- MOUHMID B ET AL: "A study of the mechanical behaviour of a glass fibre reinforced polyamide 6,6: Experimental investigation", POLYMER TESTING, ELSEVIER, AMSTERDAM, NL, vol. 25, no. 4, 1 June 2006 (2006-06-01), pages 544-552, XP027950629, ISSN: 0142-9418 [retrieved on 2006-06-01]

## Description

La présente invention concerne l'utilisation d'un composé sulfonaté, aliphatique ou aromatique, pour la fabrication d'un polyamide modifié permettant d'augmenter significativement la température de transition vitreuse dudit polyamide. L'invention concerne également une composition polyamide comprenant au moins : un polyamide modifié par un composé sulfonaté, ledit composé étant lié chimiquement à la chaîne polymère du polyamide, et des charges de renfort ou de remplissage. La composition est préférentiellement une composition à mouler, par exemple sous forme de granulés ou de poudre, servant à la fabrication d'articles par un procédé de moulage par injection.

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à température relativement élevée, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

Il apparait que le polyamide présente une température de transition vitreuse peu élevée aux alentours de 60°C pour le polyamide 66 ; en comparaison avec d'autres plastiques tels que le PET ou le PVC. Au-dessus de la Tg, les liaisons secondaires non covalentes entre les chaînes des polyamides deviennent faibles en comparaison de l'agitation thermique et le polyamide devient souple et capable de se déformer élastiquement ou plastiquement sans rupture. La seule cohésion du matériau est alors assurée par les zones cristallines. Ce comportement est l'une des propriétés qui rendent la plupart des polyamides si utiles dans divers domaines techniques.

Il existe ainsi un réel besoin d'augmenter la Tg d'un polyamide afin d'augmenter la plage de température d'utilisation dudit polyamide dans son état vitreux et élastique, en dessous de cette température de transition vitreuse, notamment pour maintenir un fort module élastique.

Par exemple l'article paru en janvier 1997 dans textile Research Journal, de El-Garf *et al*., porte sur un nylon 6 modifié par traitement avec du chlorure de dichlorobenzènesulfonyle et de la pyridine.

Il est connu de modifier la Tg d'un polyamide de diverses manières, notamment en utilisant des comonomères aromatiques lors de la réalisation du polyamide. Toutefois, pour obtenir une augmentation significative de la Tg il est nécessaire d'en ajouter une quantité importante, ce qui entraine une amorphisation de la matrice, une perte drastique des propriétés mécaniques et des problèmes rhéologiques et de mises en forme des formulations.

Il existe ainsi un besoin d'obtenir des compositions polyamides techniques pour diverses applications ayant les meilleurs propriétés mécaniques possibles par augmentation de la Tg tout en évitant les inconvénients mentionnés précédemment.

La demanderesse vient de découvrir de manière tout a fait surprenante que l'utilisation d'un composé sulfonaté, aliphatique ou aromatique, pour la fabrication d'un polyamide modifié permettait d'augmenter significativement la température de transition vitreuse dudit polyamide. Cet effet est obtenu sans modifier de manière drastique l'équilibre de phase amorphe et cristalline du polyamide et donc sans diminuer les propriétés plastiques et mécaniques du polyamide. Ledit composé sulfonaté, aliphatique ou aromatique agit donc comme un agent augmentant la température de transition vitreuse d'un polyamide.

L'invention concerne ainsi l'utilisation d'un composé sulfonaté pour la fabrication d'un polyamide modifié présentant une température de transition vitreuse augmentée, caractérisée en ce que le composé sulfonaté est représenté par la formule générale (1) :

(Z)ₙ-Y-(SO₃X)ₘ (I)

dans laquelle:
- S0₃X représente S0₃H ou S0₃M; M étant un groupement qui remplace le proton H+ de S0₃H pour formé un groupe salifié inactif;
- m est compris entre 1 et 10;
- Y est un radical hydrocarboné aromatique multivalent comprenant de 2 à 100 atomes de carbone, et pouvant comprendre des hétéroatomes;
- Z est une fonction pouvant réagir avec les fonctions amines ou acides carboxyliques des monomères du polyamide
- n est compris entre 1 et 10,
et en ce que le polyamide est choisi dans le groupe comprenant les polyamides obtenus par polycondensation d'au moins un diacide carboxylique linéaire avec une diamine linéaire ou cyclique ou entre au moins un diacide carboxylique aromatique et une diamine linéaire ou aromatique, les polyamides obtenus par polycondensation d'au moins un aminoacide sur lui-même, l'amino-acide pouvant être généré par l'ouverture hydrolytique d'un cycle lactame.

La présente invention concerne ainsi une composition polyamide comprenant au moins :
- un polyamide modifié par un composé sulfonaté, ledit composé étant lié chimiquement à la chaîne polymère du polyamide ;
- de 1 à 60 % en poids de charges de renfort ou de remplissage ; et
- éventuellement des additifs classiquement utilisés dans le domaine, caractérisée en ce que le composé sulfonaté est représenté par la formule générale (1) :

   (Z)ₙ-Y-(SO₃X)ₘ (I)
dans laquelle:
- S0₃X représente S0₃H ou S0₃M; M étant un groupement qui remplace le proton H+ de S03H pour formé un groupe salifié inactif;
- m est compris entre 1 et 10;
- Y est un radical hydrocarboné aromatique multivalent comprenant de 2 à 100 atomes de carbone, et pouvant comprendre des hétéroatomes;
- Z est une fonction pouvant réagir avec les fonctions amines ou acides carboxyliques des monomères du polyamide;
- n est compris entre 1 et 10;
et en ce que le polyamide est choisi dans le groupe comprenant les polyamides obtenus par polycondensation d'au moins un diacide carboxylique linéaire avec une diamine linéaire ou cyclique ou entre au moins un diacide carboxylique aromatique et une diamine linéaire ou aromatique, les polyamides obtenus par polycondensation d'au moins un aminoacide sur lui-même, l'amino-acide pouvant être généré par l'ouverture hydrolytique d'un cycle lactame.

Le pourcentage en poids est exprimé par rapport au poids total de la composition polyamide.

La composition est préférentiellement une composition à mouler, par exemple sous forme de granulés ou de poudre, servant à la fabrication d'articles par un procédé de moulage par injection.

On entend par « composé sulfonaté » un composé organique aromatique ou aliphatique comprenant au moins une fonction SO₃X. SO₃X représente SO₃H ou SO₃M ; M étant un groupement qui remplace le proton SO₃H pour former un groupe salifié inactif. M peut notamment être choisi parmi les éléments de la classification périodique tels que les métaux alcalins, dont notamment Li, Na, K, Cs, les métaux alcalino-terreux, dont notamment Ca, Mg, Ba, les métaux de transition, dont notamment Ti, Zr, Cr, Mn, Fe, Co, Ni, Cu, Zn, Ag, les métaux pauvres, dont notamment Al, Pb, Sn, Ga, les métalloïdes, dont notamment Sb, Ge, Si, les terres rares, ou tout autre type de cation comme les ammonium NH₄⁺, etc ...

Par groupe salifié « inactif » on entend notamment un groupe salifié qui ne réagit pas avec des fonctions amine ou des fonctions acide, en particulier avec les fonctions amine et acide des monomères à l'origine du polyamide de l'invention.

M est préférentiellement un métal alcalin de préférence le sodium ou le lithium, un métal alcalino-terreux de préférence le calcium ou le magnésium, ou un métal choisi parmi le cuivre, le zinc ou l'aluminium.

On entend par « composé aromatique sulfonaté » un composé organique comprenant au moins un cycle aromatique, tel qu'un benzène par exemple, ledit cycle aromatique portant au moins une fonction sulfonaté -SO₃X. La fonction sulfonate étant préférentiellement rattachée à un atome de carbone faisant partie du cycle aromatique.

Le composé sulfonaté est capable de se lier chimiquement à la chaine polyamide de diverses manières.

Le composé sulfonaté, une fois lié chimiquement à la chaîne polyamide peut être considéré comme une unité sulfonate rattachée.

Par exemple, il peut se lier chimiquement à la chaîne polyamide de manière à former une liaison covalente par l'intermédiaire de fonctions pouvant réagir avec les fonctions amines ou acides carboxyliques des monomères du polyamide telles les fonctions amine, acide carboxylique, aldéhyde, anhydride, hydroxyle, cétone ou leurs dérivés. Ces fonctions sont portées ou non par la structure aromatique du composé.

Cette liaison covalente est préférentiellement une liaison de type amide mais peut également être une fonction imine lorsque la ou les fonctions réactives du composé aromatique sulfonaté est un aldéhyde ou une cétone, une fonction imide lorsque la ou les fonctions réactives du composé aromatique sulfonaté est un anhydride ou un diacide vicinal, une fonction ester lorsque la ou les fonctions réactives du composé aromatique sulfonaté est un hydroxyle, etc ...

Par ailleurs, les groupements sulfonate sont capables d'interagir par des liaisons non covalentes mais de haute énergie (liaisons H et/ou ioniques et/ou complexation métallique notamment) avec un ou plusieurs éléments du polyamide tels des fonctions amine et acide résiduelles en extrémités de chaînes, des fonctions amide centrales, d'autres groupements sulfonate ou encore avec d'autres éléments présents dans le polyamide (hétéroatomes comme, par exemple, des fonctions hydroxyle, éther, amine secondaire ou tertiaire,...).

En fonction du nombre de ses fonctions pouvant réagir avec les fonctions amide ou acide carboxylique du polyamide, le composé de l'invention peut être placé dans la chaine polymère du polyamide ou alors en bout de chaine du polymère.

Le composé sulfonaté porte préférentiellement soit une ou plusieurs fonctions amine primaire et/ou une ou plusieurs fonctions acide carboxylique ou dérivées, telles que chlorure d'acide, ester ou anhydride.

Le composé sulfonaté de l'invention, qui sera lié chimiquement à la chaîne polymère du polyamide, peut notamment être représenté par la formule générale (I) :

**(Z)ₙ-Y-(SO₃X)ₘ** **(I)**

dans laquelle :
- SO₃X représente SO₃H ou SO₃M ; M étant un groupement qui remplace le proton SO₃H pour former un groupe salifié inactif ;
- m est compris entre 1 et 10 et préférentiellement égal à 1, 2 ou 3.
- Y est un radical hydrocarboné aromatique multivalent comprenant de 2 à 100 atomes de carbone, et pouvant comprendre des hétéroatomes.
- Z est une fonction pouvant réagir avec les fonctions amines ou acides carboxyliques des monomères du polyamide
- n est compris entre 1 et 10 et préférentiellement égal à 1, 2 ou 3.

Des mélanges de composés de formule (I) peuvent notamment être utilisés pour la réalisation d'un polyamide modifié.

Y comprend préférentiellement de 1 à 24 atomes de carbone. Y est un radical hydrocarboné aromatique multivalent. Y est plus préférentiellement un radical pouvant comporter notamment de 6 à 18 atomes de carbone. Le radical Y peut être éventuellement substitué, notamment de nature arylaliphatique. Le radical Y est préférentiellement un radical benzène ou naphtalène éventuellement substitué par des groupements alkyles ; et pouvant également contenir des hétéroatomes tels que l'oxygène ou le soufre.

Z est préférentiellement choisi parmi -COHal (Hal signifie halogène), -COOR, - COONRR', -CO-R, -NH₂, R et R', identiques ou différents, étant un atome d'hydrogène ou un radical alkyle, linéaire ou branché, comprenant préférentiellement de 1 à 18 atomes de carbone, plus préférentiellement de 1 à 4 atomes de carbone.

Le composé de formule (I) est notamment choisi parmi le groupe comprenant : l'acide sodium 5-sulfoisophthalique, l'acide lithium 5-sulfoisophtalique, le sodium-4-carboxybenzène sulfonate, le sodium-3-carboxybenzène sulfonate, le sodium-2-carboxybenzène sulfonate, le lithium-3-carboxybenzène sulfonate le potassium-3-carboxybenzène sulfonate, le sodium-3-carbométhoxybenzène sulfonate, le potassium-2-carbopropoxybenzène sulfonate, le sodium-2-carbométhoxyéthylbenzène sulfonate, le potassium-3-aminométhylbenzène sulfonate, le sodium-2-aminoéthylbenzène sulfonate et le potassium-3-aminopropylbenzène sulfonate.

Le polyamide modifié selon l'invention comprend généralement de 0,1 à 70 % molaire d'unité sulfonate par rapport au nombre total de moles d'unités constituant la chaîne polymérique, notamment d'unités diacide ou diamine et/ou d'unités aminoacide dans la chaîne polymérique, préférentiellement de 1 à 50 %, plus préférentiellement de 5 % à 30 %. Par mole d'unité diacide ou par mole d'unité diamine, on entend dans le cas de la mise en oeuvre d'un mélange diacide/diamine, une mole de diacide et une mole de diamine mises en oeuvre pour préparer le polyamide, en d'autres termes on entend une mole du sel diacide/diamine mise en oeuvre pour la préparation du polyamide. Par mole d'unité aminocarboxylique acide, on entend une mole d'aminoacide ou une mole de lactame mise en oeuvre pour préparer le polyamide. Dans le cas de la mise en oeuvre d'un mélange diamine/diacide, si l'un des deux monomères (diacide ou diamine) est utilisé en excès par rapport à l'autre, on réalise le calcul de la proportion molaire d'unité contenant un groupement sulfonate par rapport au nombre de moles d'unités issues du monomère excédentaire.

Selon la présente invention, le polyamide modifié comprenant un composé sulfonaté lié chimiquement à la chaîne polymère du polyamide peut être obtenu de diverses manières.

On peut le fabriquer par ajout du composé sulfonaté en polymérisation à l'état fondu du polyamide, c'est à dire à l'état liquide, en présence des monomères du polyamides. On peut également ajouter le composé sulfonaté en mélange a chaud avec le polyamide formé ou partiellement formé, par exemple à l'extrudeuse. On peut également ajouter le composé sulfonaté en phase solide, notamment lors d'une post-condensation. On peut également pour certains polyamides procéder à l'ajout du composé sulfonaté lors de la polymérisation en solution.

On préfère notamment la fabrication du polyamide modifié de l'invention par polymérisation à l'état fondu, c'est à dire à l'état liquide. Le milieu de polymérisation peut par exemple être une solution aqueuse comprenant les monomères, ou un liquide comprenant les monomères, notamment de l'eau. Le polyamide modifié de l'invention est généralement obtenu par polycondensation entre les monomères du polyamide et le composé aromatique sulfonaté, pour former des chaînes polyamides, avec formation du produit d'élimination, en particulier l'eau, dont une partie peut se vaporiser. Le composé sulfonaté peut être ajouté au début, au milieu ou en fin de polymérisation du polyamide, et en présence ou non d'une quantité de diamine ou diacide pour assurer une parfaite stoechiométrie des fonctions réactives. Cet ajustement de la stoechiométrie permet de moduler la taille de la chaîne du polyamide modifié.

Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau présente initialement dans le milieu de polymérisation et/ou formée lors de la polycondensation tout en évitant toute formation de phase solide afin d'éviter une prise en masse. La polycondensation est généralement poursuivie en phase fondue à pression atmosphérique ou réduite de manière à atteindre le degré d'avancement souhaité.

Le produit de polycondensation peut également subir une étape de post-condensation en phase solide. Cette étape est connue de l'homme du métier et permet d'augmenter le degré de polycondensation à une valeur souhaitée.

Un limiteur de chaîne peut également être utilisé pour moduler la taille de la chaîne du polyamide modifié. Ce limiteur de chaîne peut porter des fonctions non chimiquement réactives avec le polyamide. Des exemples non limitatifs de limiteurs de chaîne sont l'acide acétique, l'acide benzoïque.

Le procédé de l'invention est similaire dans ses conditions au procédé classique de préparation de polyamides ou copolyamides semi-cristallins ou amorphes, tels que les polyamides aliphatiques, polyamides semi-aromatiques et plus généralement, les polyamides linéaires obtenus par polycondensation entre un diacide aliphatique ou aromatique, et une diamine primaire aromatique ou aliphatique, les polyamides obtenus par condensation d'un lactame, d'un aminoacide ou les polyamides linéaires obtenus par condensation d'un mélange de ces différents monomères.

Le polyamide modifié selon l'invention peut notamment comprendre au moins une unité contenant un groupement sulfonate de formule (II) suivante :

**-L-Y-(SO₃X)ₘ** **(II)**

dans laquelle :
- -L est un radical issu de la condensation de deux fonctions réactives dont une des fonctions réactives est Z ; et
- Y, X, Z et m sont définis précédemment.

On entend par polyamide au sens de l'invention un polymère comprenant au moins 51 % en mole de monomères diamines ou diacides ou aminoacides ou lactames et résultant de la réaction de polymérisation de fonctions acides et amines formant lesdites fonctions amides. Le polyamide peut également comprendre d'autres fonctions, telles que des fonctions ester et/ou éther, par exemple.

Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation préférentiel de l'invention, le polyamide modifié est un polyamide de type polyamide 6, polyamide 66, polyamide 10, polyamide 11, le polyamide 12, polymétaxylylènediamine (MXD6), polyamide 66/6T, les mélanges et copolymères à base de ces polyamides.

Le polyamide est préférentiellement choisi dans le groupe comprenant les polyamides obtenus par polycondensation d'au moins un diacide carboxylique linéaire avec une diamine linéaire ou cyclique comme le PA 6.6, PA 6.10, PA 6.12, PA 12.12, PA 4.6, MXD 6 ou entre au moins un diacide carboxylique aromatique et une diamine linéaire ou aromatique comme les polytéréphtalamides, polyisophtalamides, polyaramides, les polyamides obtenus par polycondensation d'au moins un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, bien que l'on puisse utiliser aussi des polyamides de plus faibles viscosités.

Le polyamide modifié peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Le polyamide modifié peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 30 à 95 % en poids de polyamide, préférentiellement de 40 à 80 % en poids, par rapport au poids total de la composition.

La composition peut également comprendre, selon la propriété finale souhaitée, un mélange de polyamide modifié selon l'invention et un ou plusieurs autres polymères, tel que par exemple du polyamide, du polyester, des polyoléfines, du polystyrène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

Les charges de renfort ou de remplissages selon la présente invention, peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux et compositions de l'invention sont généralement obtenus par mélange des différents constituants a chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange a chaud ou a froid avec la matrice plastique. L'addition des composés et des additifs, comme la résine novolaque, peut être réalisée par ajout de ces composés dans la matrice plastique fondue sous forme pure ou sous forme de mélange concentré dans une matrice telle que par exemple une matrice plastique.

La composition selon l'invention peut être utilisée pour tout procédé de mise en forme des matières plastiques, tels que par exemple les procédés de moulage, notamment le moulage par injection, ou d'extrusion tels que l'extrusion soufflage.

La présente invention concerne ainsi aussi un procédé de moulage par injection dans lequel on introduit dans un dispositif de moulage par injection une composition selon l'invention, notamment sous forme de granulés, et l'on procède au moulage.

L'utilisation des compositions selon l'invention est particulièrement intéressante dans le cadre de la fabrication d'articles pour l'industrie automobile ou électrique.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Caractérisations

Teneurs en groupements terminaux acide (GTC) et amine (GTA) : dosées par potentiométrie, exprimées en meq/kg.

Lorsque le composé sulfonaté est un monosulfonate monofonctionnel, on peut calculer la teneur en groupements terminaux sulfonate (GTS) à partir des quantités de réactifs introduits dans le réacteur de polymérisation.

Masse molaire moyenne en nombre Mn déterminée par la formule Mn=2.10⁶/(GTA+GTC+GTS) et exprimées en g/mol.

Lorsque le composé sulfonaté est un monosulfonate monofonctionnel, on peut calculer le nombre d'extrémité de chaîne sulfonate par chaine de la manière suivante : Nsulfonate/chaîne=GTS/((GTA+GTC+GTS)/2).

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min. Le taux de cristallinité est obtenu par le calcul χc=ΔHf/ΔHf°, avec ΔHf° l'enthalpie de fusion d'un cristal pur de polyamide (ΔHf°(PA66)=188J/g). Température de transition vitreuse (T_{g}) déterminées sur le même appareil à une vitesse de 40 °C/min.

### Exemple 1 comparatif : PA 66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®. Le polyamide 66 est fabriqué selon un procédé standard de polymérisation de type polyamide 66, avec 30 minutes de finition. Le polymère obtenu est coulé sous forme de jonc, refroidi et mis sous forme de granulé par coupe des joncs.

Le polymère obtenu présente les caractéristiques suivantes : GTC = 70,2 meq/kg, GTA = 51,5 meq/kg, Mn = 16430 g/mol.

Le polyamide 66 est semi-cristallin et a les caractéristiques thermiques suivantes : Tg= 70,6 °C, Tc= 230,9 °C, Tf= 263,7 °C, ΔHf = 68,4 J/g soit χc=36,4%.

### Exemple 2 comparatif : préparation d'un copolyamide PA 66/6l 80/20

Dans un réacteur de polymérisation sont introduits 117,92 g (0,450 mol) de sel N (sel 1:1 d'hexaméthylène diamine et d'acide adipique), 31,73 g de sel 6l (sel 1 :1 d'hexaméthylène diamine et d'acide isophtalique) (0,112 mol), 1,05 g d'une solution d'hexaméthylène diamine (HMD) en solution dans l'eau à 32,5 % en poids (0,003 mol) et 135,74 g d'eau déminéralisée et 2 g d'une solution aqueuse d'agent antimousse. Le polyamide 66/6l 80/20 est fabriqué selon un procédé standard de polymérisation de type polyamide 66, avec 45 minutes de finition à pression atmosphérique. Le polymère obtenu est coulé sous forme de jonc, refroidi et mis sous forme de granulé par coupe des joncs.

Le polymère obtenu présente les caractéristiques suivantes : GTC = 86,1 meq/kg, GTA = 59,1 meq/kg, Mn = 13800 g/mol.

Le polyamide 66/6l 80/20 est semi-cristallin et a les caractéristiques thermiques suivantes : Tg= 77,9°C, Tc= 194,4°C, Tf= 239,6 °C, ΔHf = 42,6 J/g soit χc=22,7%. L'apport du cycle aromatique de l'acide isophtalique induit une légère augmentation de la Tg du PA 66 (+7°C) pour une diminution du taux de cristallinité de 38% par rapport au PA 66.

### Exemple 3 : préparation d'un polyamide 66 contenant environ 5 mol.-% de SBA

Dans un réacteur de polymérisation sont introduits 87,2 kg (332,5 mol) de sel N (sel 1:1 d'hexaméthylène diamine et d'acide adipique), 4057 g de sodium 3-carboxybenzenesulfonate à 96,7% (SBA) (17,5 mol), 3398 g d'une solution d'hexaméthylène diamine (HMD) en solution dans l'eau à 32,48 % en poids (9,5 mol) et 83 kg d'eau déminéralisée et 6,4 g d'agent antimousse Silcolapse 5020®. La teneur molaire en composé sulfonate est égale à 17,5/(332,5+17,5+9,5)=4,9 mol.-%. Le polyamide 66 contenant 4,8 mol.-% de SBA est fabriqué selon un procédé standard de polymérisation de type polyamide 66, avec 40 minutes de finition sous un vide de 70 mbar. Le polymère obtenu est coulé sous forme de jonc, refroidi et mis sous forme de granulé par coupe des joncs.

Le polymère obtenu présente les caractéristiques suivantes : GTC =51,1 meq/kg, GTA = 44,1 meq/kg, GTS= 219 meq/kg, Mn = 2.10⁶/(GTA+GTC+GTS) = 6 370 g/mol. Il y a en moyenne 1,4 extrémité sulfonate par chaîne.

Le polyamide obtenu est semi-cristallin et a les caractéristiques thermiques suivantes : Tg= 86,5°C, Tc= 228,2 °C, Tf= 259,5 °C, ΔHf = 71,2 J/g, χc=37,9%. Le polyamide terminé sulfonate, malgré une plus faible masse molaire, a une Tg largement supérieure d'environ 16 °C par rapport à celle du PA 66 et un taux de cristallinité comparable.

### Exemple 4 : préparation d'un polyamide 66 contenant environ 10 mol.-% de SBA

Dans un réacteur de polymérisation sont introduits 132,77 g (0,506 mol) de sel N (sel 1:1 d'hexaméthylène diamine et d'acide adipique), 12,73 g de sodium 3-carboxybenzenesulfonate à 99% (SBA) (0,056 mol), 12,20 g d'une solution d'hexaméthylène diamine (HMD) en solution dans l'eau à 32,25 % en poids (0,034 mol) et 127 g d'eau déminéralisée et 2 g d'agent antimousse. La teneur molaire en composé sulfonate est égale à 0,056/(0,506+0,056+0,034)= 9,4 mol.-%. Le polyamide 66 contenant 9,3 mol.-% de SBA est fabriqué selon un procédé standard de polymérisation de type polyamide 66, avec 30 minutes de finition sous un vide d'environ 10 mbar. Le polymère obtenu est coulé sur un plateau.

Le polymère obtenu présente les caractéristiques suivantes: GTC =108,7 meq/kg, GTA = 98,3 meq/kg, GTS= 435 meq/kg, Mn = 3120 g/mol. Il y a en moyenne 1,36 extrémité sulfonate par chaîne.

Le polyamide obtenu est semi-cristallin et a les caractéristiques thermiques suivantes : Tg= 97,8°C, Tc= 213,7 °C, Tf= 251,8 °C, ΔHf = 63 J/g. Le polyamide terminé sulfonate, malgré une plus faible masse molaire, a une Tg largement supérieure d'environ 27 °C par rapport à celle du PA 66, et un taux de cristallinité de 33,5 %.

### Exemple 5 : préparation d'un polyamide 66 contenant environ 18 mol.-% de SBA

Dans un réacteur de polymérisation sont introduits 116,64 g (0,445 mol) de sel N (sel 1:1 d'hexaméthylène diamine et d'acide adipique), 25,17 g de sodium 3-carboxybenzenesulfonate ou à 99% (SBA) (0,111 mol), 20,81 g d'une solution d'hexaméthylène diamine (HMD) en solution dans l'eau à 32,25 % en poids (0,058 mol) et 120,6 g d'eau déminéralisée et 2 g d'agent antimousse. La teneur molaire en composé sulfonate est égale à 0,111/(0,445+0,111+0,058)= 18,1 mol.-%. Le polyamide terminé sulfonate est fabriqué selon un procédé standard de polymérisation de type polyamide 66, avec 30 minutes de finition sous un vide d'environ 30 mbar. Le polymère obtenu est coulé sur un plateau.

Le polymère obtenu présente les caractéristiques suivantes : GTC =232,4 meq/kg, GTA = 203,5 meq/kg, GTS= 855 meq/kg, Mn = 1550 g/mol. Il y a en moyenne 1,32 extrémité sulfonate par chaîne.

Le polyamide terminé sulfonate est semi-cristallin et a les caractéristiques thermiques suivantes : Tg= 105,7°C, Tc= 183,2 °C, Tf= 239,6 °C, ΔHf = 45 J/g. Le polyamide terminé sulfonate, malgré une plus faible masse molaire, a une Tg largement supérieure d'environ 35 °C par rapport à celle du PA 66.

### Exemple 6 : préparation d'un polyamide 66 sulfonate PA 66/6AISLi 95/5

Dans un réacteur de polymérisation sont introduits 85,9 kg (344,8 mol) de sel N (sel 1:1 d'hexaméthylène diamine et d'acide adipique), 4657 g de sel de lithium d'acide 5-sulfoisophtalique à 93,33% (AISLi) (17,24 mol), 6435 g d'une solution d'hexaméthylène diamine (HMD) en solution dans l'eau à 32,47 % en poids (17,98 mol) et 81,2 kg d'eau déminéralisée et 6,4 g d'agent antimousse Silcolapse 5020®. Le polyamide 66 sulfonate est fabriqué selon un procédé standard de polymérisation de type polyamide 66, avec 30 minutes de finition à pression atmosphérique. Le polymère obtenu est coulé sous forme de jonc, refroidi et mis sous forme de granulé par coupe des joncs.

Le polymère obtenu présente les caractéristiques suivantes: GTC =102,6 meq/kg, GTA = 94,3 meq/kg, Mn = 10160 g/mol.

Le polyamide 66 sulfonate PA 66/6AISLi 95/5 est semi-cristallin et a les caractéristiques thermiques suivantes : Tg= 92,5°C, Tc= 215,4°C, Tf= 254,5 °C, ΔHf = 56,7 J/g soit χc=30,2%. Le polyamide sulfonate, malgré une plus faible masse molaire, a une Tg largement supérieure d'environ 22 °C par rapport à celle du PA 66 tout en diminuant le taux de cristallinité de seulement 17%.

La comparaison de l'essai avec l'exemple comparatif 2 montre que le sulfonate porté par le cycle aromatique est le responsable de la forte augmentation de la Tg.

### Exemple 7 : préparation d'un polyamide 66 sulfonate PA 66/6AISLi 90/10

Dans un réacteur de polymérisation sont introduits 128,98 g (0,492 mol) de sel N (sel 1:1 d'hexaméthylène diamine et d'acide adipique), 14,77 g de sel de lithium d'acide 5-sulfoisophtalique à 93,33% (AISLi) (0,0547 mol), 21,2 g d'une solution d'hexaméthylène diamine (HMD) en solution dans l'eau à 32,5 % en poids (0,0593 mol) et 122,73 g d'eau déminéralisée et 2 g d'une solution aqueuse d'agent antimousse. Le polyamide sulfonate 66/6AISLi 90/10 est fabriqué selon un procédé standard de polymérisation de type polyamide 66, avec 45 minutes de finition à pression atmosphérique. Le polymère obtenu est coulé sous forme de jonc, refroidi et mis sous forme de granulé par coupe des joncs.

Le polymère obtenu présente les caractéristiques suivantes: GTC =138,7 meq/kg, GTA =114,6 meq/kg, Mn = 7900 g/mol.

Le polyamide sulfonate 66/6AISLi 90/10 est semi-cristallin et a les caractéristiques thermiques suivantes : Tg= 99,5 °C, Tc= 175,4 °C, Tf= 242,3 °C, ΔHf = 41 J/g soit χc=21,8%. Le polyamide sulfonate, malgré une plus faible masse molaire, a une Tg largement supérieure d'environ 29 °C par rapport à celle du PA 66 pour une diminution du taux de cristallinité du PA 66 de 40 %.

La comparaison de l'essai avec l'exemple comparatif 2 montre que pour une réduction similaire du taux de cristallinité (obtenu en mettant deux fois moins d'AISLi que d'acide isophtalique), le PA sulfonate présente une Tg en augmentation de 29°C contre seulement 7°C pour le PA 66/6l.

### Exemple 8 : préparation de formulations PA 66/Fibre de verre 70/30 et PA 66 contenant 5mol.-% de SBA / Fibres de verre 70/30 en poids

Des formulations de polyamide/Fibres de verre Vetrotex FV983 dans un rapport 70/30 en poids sont réalisées dans une extrudeuse bi-vis Leistritz LSM30/34 (Diamètre 34 mm, rapport L/D=35) à une vitesse de vis de 250 rpm et avec un débit de 10kg/h (alimentation 7kg/h pour le polyamide et 3kg/h pour la fibre de verre).

Une formulation PA 66/Fibres de verre 70/30 est réalisée avec des températures de chauffe de l'extrudeuse comprises entre 250 et 285°C. Une formulation PA 66 5mol.-% de SBA/Fibre de verre 70/30 est réalisé avec des températures de chauffe de l'extrudeuse comprises entre 220 et 265°C. Les joncs sortis de l'extrudeuse sont coulés dans un bac de refroidissement à eau et ensuite granulés. Les granulés sont ensuite séchés dans une étude sous vide à 90°C pendant 14 heures.

### Exemple 9 : analyse thermomécanique dynamique en température

Les lots de formulations produits dans l'exemple 8 sont injectés sous la forme d'éprouvettes de dimensions 80 mm x 10 mm x 4 mm sur une presse à injecter Arburg Allrounder® 350 90, 220 D. La température du moule est régulée à 80°C. Pour le compound PA 66/Fibres de verre 70/30 en poids, la température de la buse d'injection est de 290°C. Pour le compound PA 66 5mol.-% SBA/Fibres de verre 70/30, la température de la buse d'injection est de 270°C.

Ces éprouvettes sont ensuite découpées avant d'être utilisées pour comparer les propriétés thermomécaniques des formulations. On utilise un appareil TA Instruments RSA3 permettant de réaliser des flexions 3 points sur les éprouvettes : on impose à l'échantillon une sollicitation sinusoïdale (fréquence 1Hz et amplitude 0,05%) et on récupère les valeurs des modules élastiques E' et de perte E". Les mesures sont effectuées en suivant une rampe de température de -40°C à 250°C à une vitesse de montée en température de 2°C/min.

Les résultat sont exprimés dans le tableau 1 suivant :

**Tableau 1**

| ***Compound*** | ***T***α ***(°C)*** | ***E' 80°C (GPa)*** | Δ***E*' *80°C*** |
|---|---|---|---|
| PA 66/Fibre de verre 70/30 en poids | 74 | 3,08 | - |
| PA 66 5mol.-%SBA/Fibre de verre 70/30 en poids | 88 | 3,79 | + 23% |

On observe que le module E' de la formulation à base de PA contenant des motifs sulfonate présente à 80°C un module plus élevé que celui de la formulation à base de PA 66.

## Revendications

1. Utilisation d'un composé sulfonaté aromatique comme agent augmentant la température de transition vitreuse d'un polyamide, **caractérisée en ce que** le composé sulfonaté est représenté par la formule générale (I) :
**(Z)ₙ-Y-(SO₃X)ₘ** **(I)**
dans laquelle :
- SO₃X représente SO₃H ou SO₃M ; M étant un groupement qui remplace le proton H+ de SO₃H pour formé un groupe salifié inactif ;
- m est compris entre 1 et 10.
- Y est un radical hydrocarboné aromatique multivalent comprenant de 2 à 100 atomes de carbone, pouvant comprendre des hétéroatomes.
- Z est une fonction pouvant réagir avec les fonctions amines ou acides carboxyliques des monomères du polyamide
- n est compris entre 1 et 10, et **en ce que** le polyamide est choisi dans le groupe comprenant les polyamides obtenus par polycondensation d'au moins un diacide carboxylique linéaire avec une diamine linéaire ou cyclique ou entre au moins un diacide carboxylique aromatique et une diamine linéaire ou aromatique, les polyamides obtenus par polycondensation d'au moins un aminoacide sur lui-même, l'amino-acide pouvant être généré par l'ouverture hydrolytique d'un cycle lactame.

2. Composition polyamide comprenant au moins :
- un polyamide modifié par un composé sulfonaté aromatique, ledit composé étant lié chimiquement à la chaîne polymère du polyamide ;
- de 1 à 60 % en poids de charges de renfort ou de remplissage ; et
- éventuellement des additifs classiquement utilisés dans le domaine, **caractérisée en ce que** le composé sulfonaté est représenté par la formule générale (I) :
**(Z)ₙ-Y-(SO₃X)ₘ** **(I)**
dans laquelle :
- SO₃X représente SO₃H ou SO₃M ; M étant un groupement qui remplace le proton H+ de SO₃H pour formé un groupe salifié inactif ;
- m est compris entre 1 et 10.
- Y est un radical hydrocarboné aromatique multivalent comprenant de 2 à 100 atomes de carbone, et pouvant comprendre des hétéroatomes.
- Z est une fonction pouvant réagir avec les fonctions amines ou acides carboxyliques des monomères du polyamide
- n est compris entre 1 et 10, et **en ce que** le polyamide est choisi dans le groupe comprenant les polyamides obtenus par polycondensation d'au moins un diacide carboxylique linéaire avec une diamine linéaire ou cyclique ou entre au moins un diacide carboxylique aromatique et une diamine linéaire ou aromatique, les polyamides obtenus par polycondensation d'au moins un aminoacide sur lui-même, l'amino-acide pouvant être généré par l'ouverture hydrolytique d'un cycle lactame.

3. Composition selon la revendication 2, **caractérisée en ce que** le composé sulfonaté est placé dans la chaine polymère du polyamide ou alors en bout de chaine du polyamide.

4. Composition selon l'une quelconque des revendications 2 à 3, **caractérisée en ce que** le composé sulfonaté est choisi parmi le groupe comprenant : l'acide sodium 5-sulfoisophthalique, l'acide lithium 5-sulfoisophtalique, le sodium-4-carboxybenzène sulfonate, le sodium-3-carboxybenzène sulfonate, le sodium-2-carboxybenzène sulfonate, le lithium-3-carboxybenzène sulfonate le potassium-3- carboxybenzène sulfonate, le sodium-3-carbométhoxybenzène sulfonate, le potassium-2-carbopropoxybenzène sulfonate, le sodium-2-carbométhoxyéthylbenzène sulfonate, le potassium-3-aminométhylbenzène sulfonate, le sodium-2-aminoéthylbenzène sulfonate et le potassium-3-aminopropylbenzène sulfonate.

5. Composition selon l'une quelconque des revendications 2 à 4, **caractérisée en ce que** le polyamide modifié comprend de 0,1 à 70 % molaire d'unité sulfonate par rapport au nombre total de moles d'unités constituant la chaîne polymérique, notamment d'unités diacide ou diamine et/ou d'unités aminoacide dans la chaîne polymérique.

6. Composition selon l'une quelconque des revendications 2 à 5, **caractérisée en ce que** le polyamide modifié est obtenu par ajout du composé sulfonaté en polymérisation à l'état fondu du polyamide en présence des monomères du polyamides.

7. Composition selon l'une quelconque des revendications 2 à 5, **caractérisée en ce que** le polyamide modifié est obtenu par ajout du composé sulfonaté en mélange a chaud avec le polyamide formé ou partiellement formé.

8. Composition selon l'une quelconque des revendications 2 à 7, **caractérisée en ce que** la composition comprend de 30 à 95 % en poids de polyamide, par rapport au poids total de la composition.

9. Composition selon l'une quelconque des revendications 2 à 8, **caractérisée en ce que** les charges de renfort ou de remplissage sont choisis dans le groupe comprenant : les fibres de verre, les fibres de carbone, les fibres naturelles, les fibres d'aramides, et les nanotubes, le chanvre, le lin, les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

10. Composition selon l'une quelconque des revendications 2 à 9, **caractérisée en ce que** les additifs sont choisis dans le groupe comprenant : les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

11. Article obtenu par mise en forme d'une composition selon l'une quelconque des revendications 2 à 10 par un procédé de moulage ou d'extrusion.

## Patentansprüche

1. Verwendung einer aromatischen Sulfonatverbindung als Mittel zur Erhöhung der Glasübergangstemperatur eines Polyamids, **dadurch gekennzeichnet, dass** die Sulfonatverbindung durch die allgemeine Formel (I) wiedergegeben wird:
**(Z)ₙ-Y-(SO₃X)ₘ** **(I)**
in der:
- SO₃X für SO₃H oder SO₃M steht; wobei M für eine Gruppe steht, die das Proton H⁺ von SO₃H zur Bildung einer inaktiven versalzten Gruppe ersetzt,
- m für einen Wert zwischen 1 und 10 steht,
- Y für einen mehrwertigen aromatischen Kohlenwasserstoffrest mit 2 bis 100 Kohlenstoffatomen, der Heteroatome umfassen kann, steht,
- Z für eine Funktion steht, die mit den Amin-oder Carbonsäurefunktionen der Monomere des Polyamids reagieren kann,
- n für einen Wert zwischen 1 und 10 steht,
und dass das Polyamid aus der Gruppe umfassend die durch Polykondensation mindestens einer linearen Dicarbonsäure mit einem linearen oder cyclischen Diamin oder mindestens einer aromatischen Dicarbonsäure und einem linearen oder aromatischen Diamin erhaltenen Polyamide und die durch Polykondensation mindestens einer Aminosäure mit sich selbst, wobei die Aminosäure durch hydrolytische Öffnung eines Lactamrings erzeugt werden kann, erhaltenen Polyamide ausgewählt ist.

2. Polyamidzusammensetzung, umfassend mindestens:
- ein durch eine aromatische Sulfonatverbindung modifiziertes Polyamid, wobei die Verbindung chemisch an die Polymerkette des Polyamids gebunden ist;
- 1 bis 60 Gew.-% verstärkende oder streckende Füllstoffe; und
- gegebenenfalls auf dem Gebiet herkömmlicherweise verwendete Additive,
**dadurch gekennzeichnet, dass** die Sulfonatverbindung durch die allgemeine Formel (I) wiedergegeben wird:
**(Z)ₙ-Y-(SO₃X)ₘ** **(I)**
in der:
- SO₃X für SO₃H oder SO₃M steht; wobei M für eine Gruppe steht, die das Proton H⁺ von SO₃H zur Bildung einer inaktiven versalzten Gruppe ersetzt,
- m für einen Wert zwischen 1 und 10 steht,
- Y für einen mehrwertigen aromatischen Kohlenwasserstoffrest mit 2 bis 100 Kohlenstoffatomen, der Heteroatome umfassen kann, steht,
- Z für eine Funktion steht, die mit den Amin-oder Carbonsäurefunktionen der Monomere des Polyamids reagieren kann,
- n für einen Wert zwischen 1 und 10 steht,
und dass das Polyamid aus der Gruppe umfassend die durch Polykondensation mindestens einer linearen Dicarbonsäure mit einem linearen oder cyclischen Diamin oder mindestens einer aromatischen Dicarbonsäure und einem linearen oder aromatischen Diamin erhaltenen Polyamide und die durch Polykondensation mindestens einer Aminosäure mit sich selbst, wobei die Aminosäure durch hydrolytische Öffnung eines Lactamrings erzeugt werden kann, erhaltenen Polyamide ausgewählt ist.

3. Zusammensetzung nach Anspruch 2, **dadurch gekennzeichnet, dass** die Sulfonatverbindung in der Polymerkette des Polyamids oder auch am Kettenende des Polyamids angeordnet ist.

4. Zusammensetzung nach einem der Ansprüche 2 bis 3, **dadurch gekennzeichnet, dass** die Sulfonatverbindung aus der Gruppe umfassend 5-Sulfoisophthalsäure-Natriumsalz, 5-Sulfoisophthalsäure-Lithiumsalz, Natrium-4-carboxybenzolsulfonat, Natrium-3-carboxybenzolsulfonat, Natrium-2-carboxybenzolsulfonat, Lithium-3-carboxybenzolsulfonat, Kalium-3-carboxybenzolsulfonat, Natrium-3-carbomethoxybenzolsulfonat, Kalium-2-carbopropoxybenzolsulfonat, Natrium-2-carbomethoxyethylbenzolsulfonat, Kalium-3-aminomethylbenzolsulfonat, Natrium-2-aminoethylbenzolsulfonat und Kalium-3-aminopropylbenzolsulfonat ausgewählt ist.

5. Zusammensetzung nach einem der Ansprüche 2 bis 4, **dadurch gekennzeichnet, dass** das modifizierte Polyamid 0,1 bis 70 Mol-% Sulfonat-Einheit, bezogen auf die Gesamtzahl von Molen von Einheiten, aus denen die Polymerkette aufgebaut ist, insbesondere Disäure- oder Diamin-Einheiten und/oder Aminosäure-Einheiten in der Polymerkette, umfasst.

6. Zusammensetzung nach einem der Ansprüche 2 bis 5, **dadurch gekennzeichnet, dass** das modifizierte Polyamid durch Zugabe der Sulfonatverbindung bei der Schmelzepolymerisation des Polyamids in Gegenwart von Monomeren des Polyamids erhalten wird.

7. Zusammensetzung nach einem der Ansprüche 2 bis 5, **dadurch gekennzeichnet, dass** das modifizierte Polyamid durch Zugabe der Sulfonatverbindung durch Heißmischen mit dem gebildeten oder teilweise gebildeten Polyamid erhalten wird.

8. Zusammensetzung nach einem der Ansprüche 2 bis 7, **dadurch gekennzeichnet, dass** die Zusammensetzung 30 bis 95 Gew.-% Polyamid, bezogen auf das Gesamtgewicht der Zusammensetzung, umfasst.

9. Zusammensetzung nach einem der Ansprüche 2 bis 8, **dadurch gekennzeichnet, dass** die verstärkenden oder streckenden Füllstoffe aus der Gruppe umfassend Glasfasern, Kohlefasern, Naturfasern, Aramidfasern, Nanoröhren, Hanf, Flachs, plättchenförmige, teilchenförmige Füllstoffe und/oder exfolierbare oder nicht exfolierbare Nanofüllstoffe wie Aluminiumoxid, Ruß, Aluminosilikat-Tone, Montmorillonite, Zirconiumphosphat, Kaolin, Calciumcarbonat, Diatomeenerden, Graphit, Glimmer, Siliciumdioxid, Titandioxid, Zeolithe, Talk, Wollastonit, polymere Füllstoffe wie beispielsweise Dimethacrylat-Teilchen, Glasperlen oder Glaspulver ausgewählt sind.

10. Zusammensetzung nach einem der Ansprüche 2 bis 9, **dadurch gekennzeichnet, dass** die Additive aus der Gruppe umfassend Schmiermittel, Flammschutzmittel, Weichmacher, Nukleierungsmittel, Schlagzähigkeitsmodifikatoren, Katalysatoren, Licht- und/oder Wärmestabilisatoren, Antioxidantien, Antistatika, Farbmittel, Mattierungsmittel, Formhilfsmittel oder andere herkömmliche Additive ausgewählt sind.

11. Artikel, erhalten durch Formen einer Zusammensetzung nach einem der Ansprüche 2 bis 10 nach einem Abform- oder Extrusionsverfahren.

## Claims

1. Use of an aromatic sulfonate compound as agent which increases the glass transition temperature of a polyamide, **characterized in that** the sulfonate compound is represented by the general formula (I):
(Z)ₙ-Y-(SO₃X)ₘ (I)
in which:
- SO₃X represents SO₃H or SO₃M; M being a group which replaces the proton H⁺ of SO₃H in order to form an inactive salified group,
- m is between 1 and 10,
- Y is a polyvalent aromatic hydrocarbon radical comprising from 2 to 100 carbon atoms, which can comprise heteroatoms,
- Z is a functional group which can react with the amine or carboxylic acid functional groups of the monomers of the polyamide,
- n is between 1 and 10,
and **in that** the polyamide is chosen from the group consisting of the polyamides obtained by polycondensation of at least one linear dicarboxylic acid with a linear or cyclic diamine or between at least one aromatic dicarboxylic acid and a linear or aromatic diamine, the polyamides obtained by polycondensation of at least one amino acid with itself, it being possible for the amino acid to be generated by the hydrolytic opening of a lactam ring.

2. Polyamide composition comprising at least:
- a polyamide modified by an aromatic sulfonate compound, the said compound being chemically bonded to the polymer chain of the polyamide;
- from 1% to 60% by weight of reinforcing or bulking fillers; and
- optionally additives conventionally used in the field, **characterized in that** the sulfonate compound is represented by the general formula (I):
(Z)ₙ-Y-(SO₃X)ₘ (I)
in which:
- SO₃X represents SO₃H or SO₃M; M being a group which replaces the proton H⁺ of SO₃H in order to form an inactive salified group,
- m is between 1 and 10,
- Y is a polyvalent aromatic hydrocarbon radical comprising from 2 to 100 carbon atoms and which can comprise heteroatoms,
- Z is a functional group which can react with the amine or carboxylic acid functional groups of the monomers of the polyamide,
- n is between 1 and 10,
and **in that** the polyamide is chosen from the group consisting of the polyamides obtained by polycondensation of at least one linear dicarboxylic acid with a linear or cyclic diamine or between at least one aromatic dicarboxylic acid and a linear or aromatic diamine, the polyamides obtained by polycondensation of at least one amino acid with itself, it being possible for the amino acid to be generated by the hydrolytic opening of a lactam ring.

3. Composition according to Claim 2, **characterized in that** the sulfonate compound is placed in the polymer chain of the polyamide or else at the end of the chain of the polyamide.

4. Composition according to either one of Claims 2 and 3, **characterized in that** the sulfonate compound is chosen from the group consisting of: 5-sulfoisophthalic acid sodium salt, 5-sulfoisophthalic acid lithium salt, sodium 4-carboxybenzenesulfonate, sodium 3-carboxybenzenesulfonate, sodium 2-carboxybenzenesulfonate, lithium 3-carboxybenzenesulfonate, potassium 3-carboxybenzenesulfonate, sodium 3-carbomethoxybenzenesulfonate, potassium 2-carbopropoxybenzenesulfonate, sodium 2-carbomethoxyethylbenzenesulfonate, potassium 3-aminomethylbenzenesulfonate, sodium 2-aminoethylbenzenesulfonate and potassium 3-aminopropylbenzenesulfonate.

5. Composition according to any one of Claims 2 to 4, **characterized in that** the modified polyamide comprises from 0.1 mol% to 70 mol% of sulfonate unit with respect to the total number of moles of units constituting the polymer chain, in particular of diacid or diamine units and/or of amino acid units in the polymer chain.

6. Composition according to any one of Claims 2 to 5, **characterized in that** the modified polyamide is obtained by addition of the sulfonate compound in melt polymerization of the polyamide in the presence of the monomers of the polyamide.

7. Composition according to any one of Claims 2 to 5, **characterized in that** the modified polyamide is obtained by addition of the sulfonate compound in blending under hot conditions with the formed or partially formed polyamide.

8. Composition according to any one of Claims 2 to 7, **characterized in that** the composition comprises from 30% to 95% by weight of polyamide, with respect to the total weight of the composition.

9. Composition according to any one of Claims 2 to 8, **characterized in that** the reinforcing or bulking fillers are chosen from the group consisting of: glass fibres, carbon fibres, natural fibres, aramid fibres, and nanotubes, hemp, flax, lamellar particulate fillers and/or exfoliable or nonexfoliable nanofillers, such as alumina, carbon black, aluminosilicate clays, montmorillonites, zirconium phosphate, kaolin, calcium carbonate, diatomaceous earths, graphite, mica, silica, titanium dioxide, zeolites, talc, austenite, polymeric fillers, such as, for example, dimethacrylate particles, glass beads and glass powder.

10. Composition according to any one of Claims 2 to 9, **characterized in that** the additives are chosen from the group consisting of: lubricants, flame retardants, plasticizers, nucleating agents, impact modifiers, catalysts, light and/or heat stabilizers, antioxidants, antistatics, colourants, mattifying agents, moulding aids or other conventional additives.

11. Article obtained by forming a composition according to any one of Claims 2 to 10 by a moulding or extrusion process.
